**Europäisches Patentamt**

**European Patent Office**

**Office européen des brevets**

(19)

(11) Numéro de publication : **0 104 975**
**B1**

(12)

# FASCICULE DE BREVET EUROPÉEN

(45) Date de publication du fascicule du brevet :
15.06.88

(51) Int. Cl.⁴ : **G 01 K 17/00**, G 01 K 7/02

(21) Numéro de dépôt : **83401716.2**

(22) Date de dépôt : **29.08.83**

(54) Capteur de flux énergétique en particulier flux thermique et rayonnement visible ou infrarouge.

(30) Priorité : 30.08.82 FR 8214767

(43) Date de publication de la demande :
04.04.84 Bulletin 84/14

(45) Mention de la délivrance du brevet :
15.06.88 Bulletin 88/24

(84) Etats contractants désignés :
AT BE CH DE GB IT LI LU NL SE

(56) Documents cités :
EP-A- 0 003 271
US-A- 3 680 374
JOURNAL OF PHYSICS E: SCIENTIFIC INSTRU-
MENTS, vol. 10, no. 7, juillet 1977, pages 702-704; J.M.
MOYNAULT et al.: "Nouveau fluxmètre à faible constante de temps pour mesurer la puissance d'un laser
moléculaire"

(73) Titulaire : ISOVER SAINT-GOBAIN
Les Miroirs 18, avenue d'Alsace
F-92400 Courbevoie (FR)

(72) Inventeur : Degenne, Michel
35 rue Paul Louis Giencourt
F-60600 Giencourt (FR)

(74) Mandataire : Leconte, Jean-Gérard et al
Saint-Gobain Recherche 39, Quai Lucien Lefranc
F-93304 Aubervilliers Cedex (FR)

EP 0 104 975 B1

## Description

La présente invention est relative d'une façon générale à la mesure d'un flux énergétique et en particulier à la mesure d'un flux thermique, c'est-à-dire à la détermination de la quantité de chaleur qui passe par unité de temps et de surface à travers une paroi et à la mesure d'un rayonnement visible ou infrarouge.

Elle concerne un dispositif pour la mesure d'un flux énergétique comportant un fluxmètre thermique, c'est-à-dire un appareil de mesure d'un flux thermique, utilisé notamment pour les mesures de la conductivité ou de la résistance thermique, par exemple de matériaux d'isolation ou d'éléments de construction.

On sait que la mesure des propriétés thermiques de certains matériaux isolants légers et épais nécessite l'utilisation de dispositif du genre indiqué ci-dessus ayant une grande surface de mesure.

Pour réaliser de telles mesures, on a déjà mis au point plusieurs types de fluxmètres thermiques. L'un de ces fluxmètres, décrit dans le brevet européen 0 003 271, comporte un substrat en un matériau isolant de l'électricité dans lequel est ménagé un réseau de trous traversants et plusieurs thermocouples associés en série. Les jonctions chaudes et froides des thermocouples sont des revêtements métalliques, notamment de cuivre et de nickel respectivement disposés sur les faces opposées du substrat tandis que les conducteurs de chaque thermocouple sont formés par des revêtements métalliques déposés respectivement sur les faces opposées du substrat et sur les parois de trous adjacents qui traversent ledit substrat d'une part pour relier les jonctions chaude et froide l'une à l'autre, d'autre part pour relier les thermocouples en série.

Il est alors possible de prélever aux bornes de ce montage en série une tension électrique qui est la somme des forces électromotrices engendrées par tous les thermocouples et qui est une fonction de la différence entre les températures régnant respectivement de part et d'autre du substrat.

De façon connue en soi, on peut, à l'aide de la valeur de cette tension déterminer le flux thermique traversant le fluxmètre.

Ce fluxmètre a déjà représenté un grand progrès par rapport aux fluxmètres précédents dans lesquels les conducteurs étaient constitués par des tronçons de fils insérés dans les trous du substrat et ensuite soudés aux emplacements convenables. En effet il a éliminé les fils nécessitant des opérations manuelles ponctuelles de mise en place et de soudure au profit de dépôts métalliques réalisables globalement, c'est-à-dire sans opérations ponctuelles, et automatiquement par des techniques de métallisation et de photogravure plus fiables, parfaitement reproductibles, rendant possible l'augmentation du nombre de jonctions sans augmentation du travail de fabrication. Il en a résulté :

- la possibilité de réaliser des fluxmètres de grande surface et de diverses formes, une rapidité de réalisation en série avec une bonne reproductibilité géométrique ou électrique,
- une uniformité dans la réalisation des jonctions,
- l'absence de surépaisseur sur les faces du substrat du fait de l'élimination des soudures,
- une grande sensibilité par l'augmentation de la densité des jonctions, c'est-à-dire de l'augmentation du nombre de jonctions par unité de surface,
- une intégration de la température de surface à l'aide de plaquettes métalliques formant les conducteurs superficiels et la réalisation de deux plans constituant la face chaude et la face froide du substrat, ces deux plans présentant une meilleure isothermicité.

Cependant, pour des raisons de commodité et de coût de réalisation des dépôts métalliques, en particulier sur la paroi des trous qui traversent le substrat, raisons qui tiennent essentiellement au fait que les ateliers de métallisation avant tout développés en vue de la fabrication de circuits imprimés ne sont couramment pas équipés pour le dépôt de certains métaux, on est limité dans le choix des métaux à déposer et on est souvent amené pour réaliser ces fluxmètres à choisir des couples de métaux dont le rendement thermoélectrique n'est pas forcément le meilleur.

En outre le fluxmètre décrit précédemment possède des trous alternativement revêtus en un métal, alternativement en l'autre métal du thermocouple, et ceci constitue une complication de réalisation.

Par ailleurs, le risque de créer des courts circuits thermiques en multipliant le nombre de jonctions par unité de surface limite l'augmentation de la sensibilité.

La présente invention vise à remédier aux inconvénients des fluxmètres précédemment décrits, à savoir épaisseur difficilement réductible engendrant des fuites thermiques latérales et une certaine inertie thermique, densité de jonctions impossible à accroître sous peine de risques de courts circuits thermiques, choix réduit de métaux formant un couple thermoélectrique.

Elle vise également à fournir un fluxmètre utilisable pour la mesure d'un flux thermique, mais également pour la mesure d'autres flux énergétiques, notamment rayonnement lumineux visible ou rayonnement infrarouge.

Elle propose un nouveau capteur utilisable pour constituer un fluxmètre employant des éléments déjà préfabriqués pour l'industrie électronique et disponibles sur le marché et/ou des revêtements métalliques couramment réalisés pour les besoins de l'industrie électronique, donc meilleur marché et ne nécessitant pas d'opérations ou d'investissements spéciaux, permettant un choix de métaux ou alliages formant un thermocouple performant, dans lequel la densité de jonctions thermoélectriques peut être augmentée, dans lequel tous les trous traversant le substrat sont revêtus du même métal.

Ce nouveau capteur conserve les avantages des capteurs de fluxmètres précédemment décrits, en outre il présente des avantages supplémentaires et il en résulte notamment de meilleures performances et une meilleure sensibilité.

Ce capteur de flux énergétique, formé d'un substrat en un matériau isolant thermique et électrique, revêtu sur chacune de ses faces parallèles, perpendiculaires au flux, de plaquettes en un premier métal ou alliage et traversé par des trous reliant chacun une plaquette d'une face à une seule plaquette non encore reliée de l'autre face, trous dont la paroi est également revêtue du même premier métal, est tel qu'il possède dans l'épaisseur dudit substrat et parallèlement à ses faces, des éléments de surface séparés, en un second métal ou alliage à propriétés thermoélectriques par rapport au premier, deux points de chacun de ces éléments de surface constituant les jonctions chaude et froide d'un thermocouple, étant reliés électriquement à une plaquette métallique respective de chaque face du substrat par un revêtement du premier métal ou alliage sur la paroi de trous joignant chacun desdits deux points aux plaquettes, lesdites deux plaquettes ainsi reliées par l'intermédiaire des éléments de surface étant préalablement encore séparées.

Avantageusement, pour des raisons de symétrie du système, les éléments de surface appartenant à un ou plusieurs plans parallèles aux faces du substrat sont respectivement situés à mi-distance entre ces deux faces, ou ont des pièces disposées symétriquement par rapport au plan situé à mi-distance entre ces deux faces.

Avantageusement également, les plaquettes sur chaque face du substrat sont disposées à l'aplomb des jonctions respectivement chaude et froide auxquelles elles sont reliées et les trous reliant directement deux plaquettes sont perpendiculaires aux faces du substrat.

Pour éviter les ponts thermiques, entre une jonction froide et la jonction chaude contiguë, les éléments de surface qui les contiennent sont découpés afin que la longueur du trajet métallisé entre lesdites deux jonctions soit allongée.

Pour la même raison, sur chaque plaquette, le trajet entre l'arrivée du trou la joignant à une plaquette de l'autre face et l'arrivée du trou la joignant à une jonction chaude ou froide est allongé par des pistes isolantes tracées dans la plaquette et formant des chicanes.

Dans un mode de réalisation chaque élément de surface est en une seule pièce et appartient à un plan unique situé dans l'épaisseur du substrat.

Dans un autre mode de réalisation des éléments de surface sont en plusieurs pièces qui appartiennent à plusieurs plans intermédiaires disposés dans l'épaisseur du substrat.

De tels capteurs seront avantageusement associés en série pour former un fluxmètre.

Ce fluxmètre pourra être placé dans un flux thermique délivrant alors une différence de potentiel à ses bornes qui est l'expression de ce flux thermique. Recouvert sur une de ses faces, au moins sur les plaquettes, d'un revêtement absorbant un rayonnement visible ou infrarouge et le transformant en chaleur et ayant l'autre face maintenue à température constante, ce fluxmètre placé sur le trajet d'un rayonnement visible ou infrarouge délivre à ses bornes une différence de potentiel qui caractérise le rayonnement.

D'autres caractéristiques et avantages de l'invention apparaîtront au cours de la description qui va suivre donnée uniquement à titre d'exemple et faite en se référant aux dessins annexés sur lesquels :

- la figure 1 est un schéma de principe en perspective montrant l'agencement des différents éléments du capteur utilisable dans un fluxmètre ;

- la figure 2 est un schéma donnant un exemple des formes avantageuses des revêtements métalliques ;

- la figure 3 est une vue de dessus du capteur montrant l'arrangement des revêtements sur une face ;

- la figure 4 est un schéma des conducteurs électriques aux bornes du fluxmètre ;

- la figure 5 est un schéma d'une variante de capteur ;

- la figure 6 est un schéma selon cette variante de la fig 5 montrant une forme de revêtement particulière ;

- la figure 7 est un schéma selon la variante de la figure 5 montrant une autre forme de revêtement.

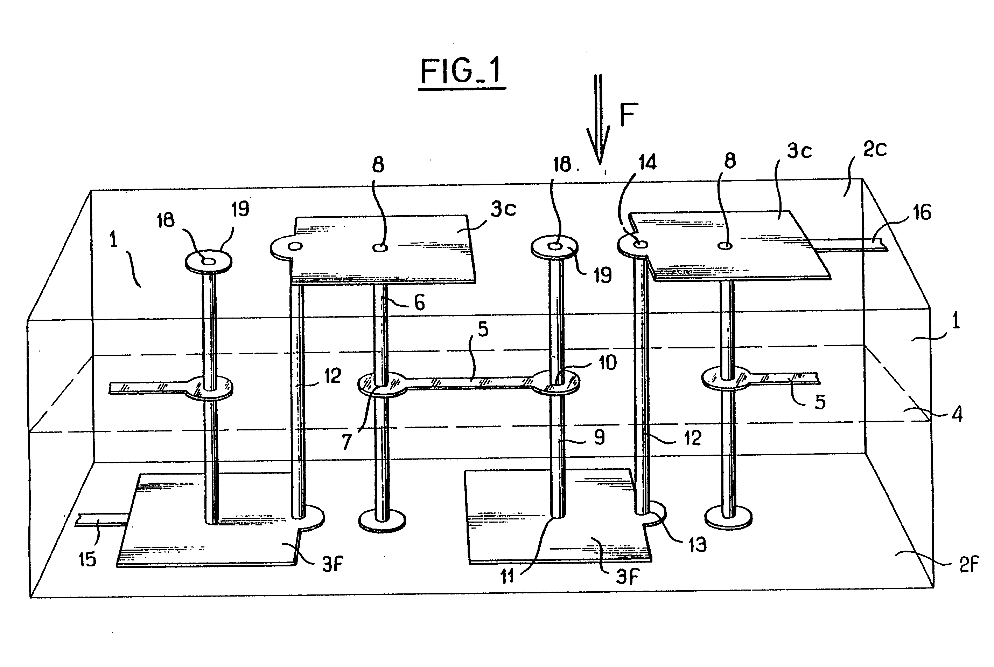

La fig 1 montre une portion de capteur de flux énergétique utilisable dans un fluxmètre servant à mesurer un flux thermique ou un rayonnement. Ce capteur comprend un substrat 1 en un matériau homogène, isotrope, isolant électrique et thermique, stable dans le temps, tel qu'un verre époxy, sous forme d'une seule plaque ou de plusieurs plaques accolées, rigide(s) ou souple(s). Sur chacune de ses faces 2c et 2f disposées perpendiculairement au flux énergétique à mesurer et dirigé suivant la flèche F, ce substrat est revêtu de plaquettes métalliques telles que 3c et 3f, par exemple rectangulaires, juxtaposées et isolées électriquement les unes des autres, en un premier métal ou alliage, du cuivre par exemple.

Dans un plan intermédiaire 4 parallèle aux faces 2c et 2f et situé dans l'épaisseur même du substrat 1, sont disposés des éléments de surfaces métalliques tels que 5 séparés les uns des autres. Le métal ou alliage de ces éléments de surface 5 est choisi pour avoir des propriétés thermoélectriques par rapport au premier métal des plaquettes 3c et 3f, et c'est par exemple du Constantan si le premier métal est du cuivre.

Des trous 6, percés au travers du substrat 1 en direction de la face 2c, et dont la paroi est revêtue d'une couche de métal ou alliage, joignent un point ou zone 7 de chaque élément de surface 5 à un point ou zone 8 appartenant à une plaquette 3c et situé dans la région du centre de cette plaquette.

Des trous 9, percés au travers du substrat 1 en direction de la face 2f, dont la paroi est revêtue d'une couche de métal ou alliage, joignent un autre point ou zone 10 de chaque élément de surface 5 à un point ou zone 11 appartenant à une plaquette 3f et approximativement centré sur ladite plaquette.

Par ailleurs, chaque ensemble ainsi constitué, à savoir une plaquette 3c, un trou métallisé 6, un élément de surface métallique 5, un trou métallisé 9, une plaquette 3f, est relié électriquement à l'ensemble du même type qui le suit et à celui qui le précède. Pour cela, des trous métallisés 12 prennent naissance à l'intérieur de la plaquette 3c de chaque ensemble en un point ou zone 14, situé sur sa bordure de préférence, traversent toute l'épaisseur du substrat 1 et aboutissent sur sa face 2f en un point ou une zone 13 appartenant à la plaquette 3f de l'ensemble qui le précède, de préférence sur sa bordure.

Le métal ou l'alliage qui revêt les trous 12 est choisi surtout pour sa bonne conduction électrique tandis que le métal ou l'alliage qui revêt les trous 6 et 9 est choisi avant tout pour sa bonne conduction thermique.

Pour simplifier la réalisation de ce capteur, il est intéressant que le métal ou l'alliage revêtant tous les trous et celui de toutes les plaquettes soit le même. On choisit notamment le cuivre, le constantan ayant de bonnes propriétés thermoélectriques par rapport au cuivre formant alors les éléments de surface 5 ; mais d'autres métaux ou alliages formant des couples thermoélectriques peuvent également être choisis.

Les deux points 7 et 10 de chaque élément de surface métallique 5, situés au point de contact des deux métaux ou alliages différents, constituent des jonctions respectivement chaude et froide d'un thermocouple. Les différents thermocouples ainsi constitués sont reliés les uns aux autres en série, par le trou métallisé 6, la plaquette 3c, le trou métallisé 12, la plaquette 3f et le trou métallisé 9.

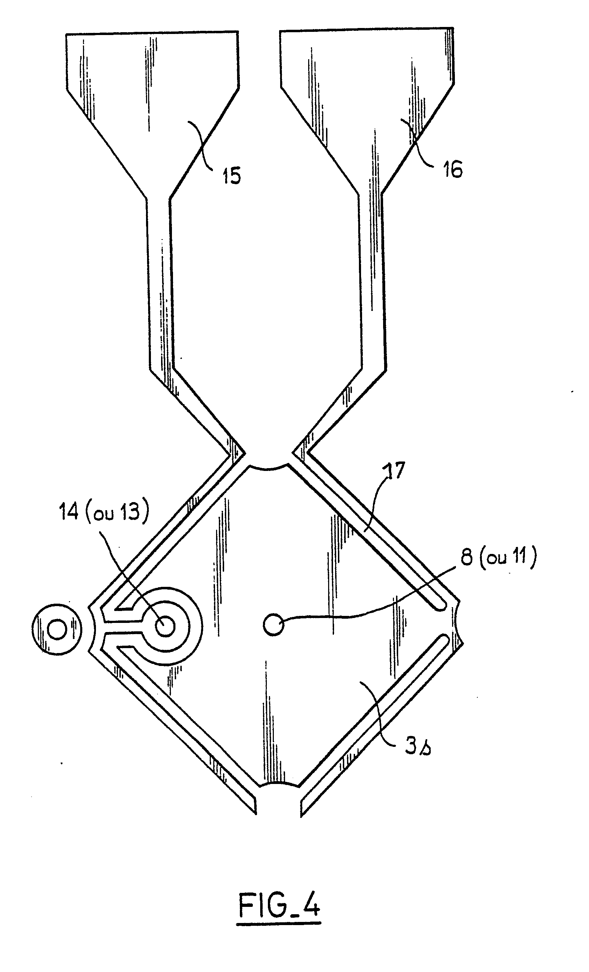

Lorsque des différences de température existent entre les jonctions chaudes 7 et froides 10 de chaque thermocouple une différence de potentiel peut être prélevée aux extrémités de la série de thermocouples. Ainsi qu'il est connu, notamment par le brevet EP 0 003 271 déjà cité, les conducteurs aux extrémités de la série sont avantageusement également des dépôts métalliques 15, 16 fig 1 et fig 4.

Avantageusement, pour des raisons de symétrie du système, le plan 4 intermédiaire est situé à mi épaisseur du substrat 1.

L'ensemble précédemment décrit fonctionne de la façon suivante. Lorsqu'une plaque de substrat 1 revêtue sur ses faces, de plaquettes 3c et 3f, percée de trous métallisés 6, 9, 12, ayant des éléments de surfaces métalliques 5 dans son plan médian comme décrit précédemment, est placée dans un flux énergétique, par exemple un flux thermique extérieur perpendiculaire à ses faces 2c et 2f et également à son plan 4 contenant les jonctions chaudes 7 et froides 10, c'est-à-dire dirigé suivant la flèche F, un gradient de température s'établit entre les deux faces 2c et 2f. Les plaquettes métalliques respectivement 3c et 3f qui appartiennent aux faces 2c et 2f sont donc portées à des températures différentes, respectivement Tc et Tf. La chaleur ressentie sur la face que nous appellerons « chaude » 2c par les plaquettes 3c est transmise jusqu'aux points 7 des éléments de surfaces métalliques 5 situées dans le plan médian par l'intermédiaire des revêtements métalliques conducteurs thermiques des trous 6. De la même façon le « froid » ressenti sur la face dite froide 2f par les plaquettes 3f est transmis jusqu'aux points 10 des éléments de surfaces métalliques 5 du plan médian 4. Il en résulte une différence de température entre les jonctions chaudes 7 et froides 10 des différents thermocouples, différence de température qui est la représentation de la différence de température existant entre les deux faces 2c et 2f. Chaque thermocouple génère donc une différence de potentiel et les différents thermocouples étant électriquement associés en série par les trous 6, 9, 12 et par les plaquettes 3c et 3f, on peut recueillir aux bornes de l'ensemble du capteur une différence de potentiel qui caractérise le flux thermique dans lequel est plongé le capteur.

Pour un meilleur fonctionnement, il convient de favoriser la conduction thermique entre chaque plaquette 3c ou 3f et la jonction chaude 7 ou froide 10 à laquelle elle est reliée. Par conséquent, lors du choix des métaux ou alliages à déposer, on préférera déposer dans les trous 6 et 9 des métaux ou alliages très bons conducteurs thermiques. Par contre, il importe de limiter la conduction thermique entre les jonctions chaudes 7 et froides 10 consécutives et appartenant au même thermocouple, cette conduction tendant à réduire l'écart de température entre lesdites deux jonctions, donc à réduire la sensibilité du capteur. De la même façon, il importe d'éviter au maximum l'égalisation des températures Tc et Tf entre la face dite chaude 2c et la face dite froide 2f du substrat 1 par conduction thermique au travers des trous métallisés 12. Des modifications de la forme géométrique des plaquettes 3c et 3f et des éléments de surfaces métalliques 5 doivent jouer dans ce sens.

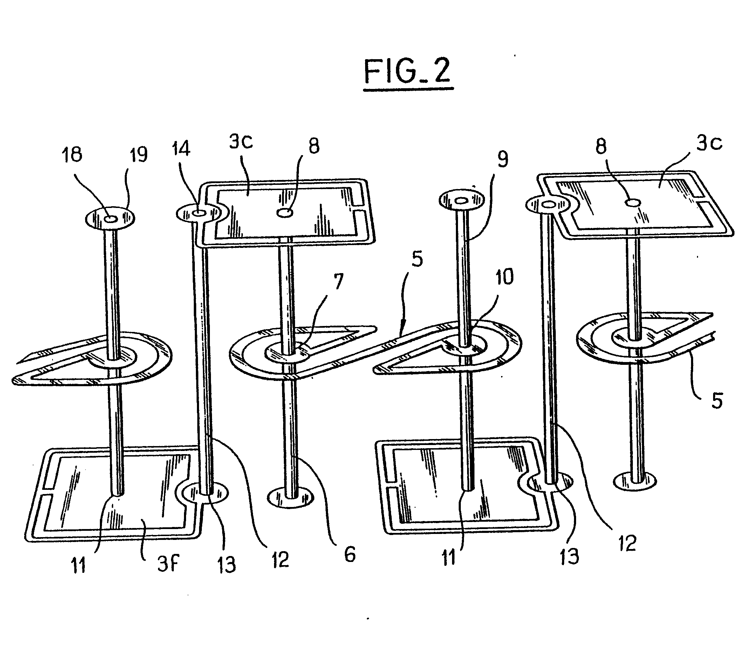

Ainsi, la fig 2 montre un ex des modifications de formes possibles pour réduire la conduction thermique entre les deux faces 2c et 2f d'une part, entre les deux jonctions chaude 7 et froide 10 d'autre part. Ces modifications consistent à allonger au maximum le chemin métallisé conduisant d'une part des points 8 appartenant à la face chaude 2c, aux points 11 appartenant à la face froide 2f, et d'autre part des jonctions froides 7 aux jonctions chaudes 10. Cet allongement du chemin est obtenu par traçage de pistes 17, isolantes thermiquement dans les plaquettes 3c et 3f créant des chicanes entre le point 8 et le point 14 des plaquettes 3c et entre le point 11 et le point 13 des plaquettes 3f. Les formes de chicanes peuvent bien entendu varier.

La fig 2 donne un exemple de forme dans lequel la piste isolante 17 longe à quelques dixièmes de millimètre de distance les bords des plaquettes, et est ouverte du côté opposé aux points 13 et 14.

Pour ce qui concerne les éléments de surface 5, cet allongement de chemin est obtenu en donnant auxdits éléments une forme approximativement en S comme montré fig 2, les jonctions chaudes 7 et froides 10 étant situées aux extrémités du tracé du S.

Comparée aux fluxmètres de l'art antérieur, notamment celui décrit dans EP-A1-0 003 271, cette nouvelle réalisation introduit un troisième plan, le plan intermédiaire 4 uniquement réservé aux jonctions chaudes et froides et dégagé des plaquettes qui servent au captage du flux.

Grâce à ce plan 4 supplémentaire, une densité de jonctions par unité de surface, plus importante que précédemment est permise.

Pour améliorer la sensibilité du fluxmètre, on imbriquera les unes dans les autres les plaquettes 3c d'une part, 3f d'autre part et les surfaces métalliques 5 par ailleurs.

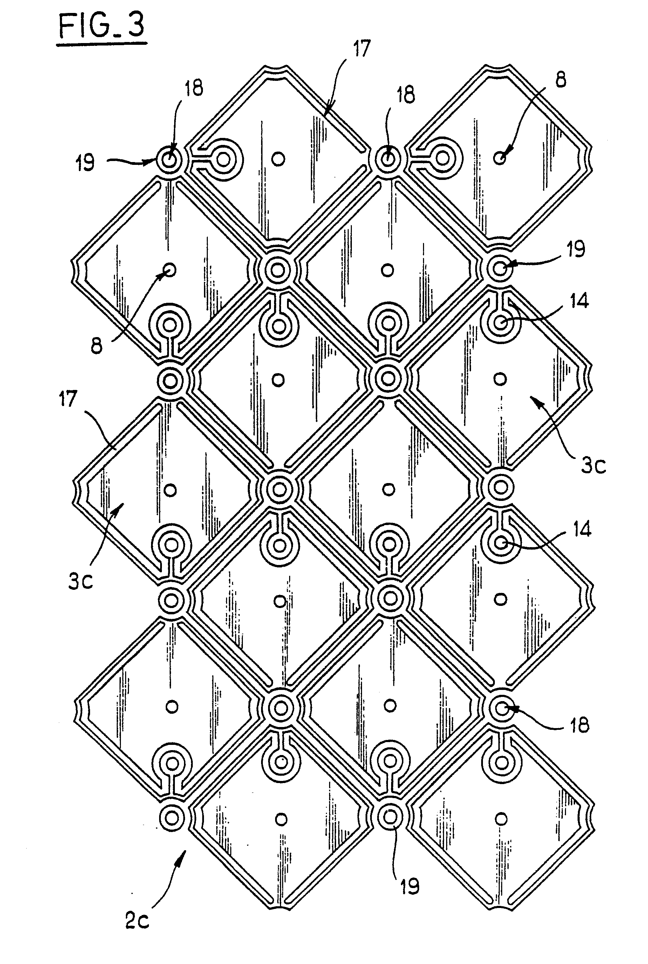

Ainsi on pourra choisir la disposition de plaquettes par exemple 3c montrée fig 3. Chaque plaquette 3c a une forme de losange et est entourée d'autres plaquettes pratiquement accolées. On retrouve dans chaque plaquette les pistes isolantes ou chicanes 17.

Au centre de chaque losange apparaît un point, blanc sur la figure, qui représente le point 8 d'arrivée du trou métallisé 6. Entouré par la chicane 17, dessinant une enclave circulaire dans un angle et à l'intérieur de chaque losange, apparaît un autre point qui est l'arrivée 14 du trou métallisé 12. A l'extérieur de chaque losange apparaissent de nouveaux points 18 entourés d'une rondelle 19. Pour des facilités de réalisation, les trous métallisés 6 et 9 décrits jusqu'à présent comme traversant seulement une demi épaisseur de substrat 1, sont en fait traversants et ils débouchent en 18 sur l'autre face et la rondelle 19 est une rondelle métallisée de protection du dépôt métallique à l'intérieur du trou, utile lors de la fabrication.

Les plaquettes sur l'autre face du substrat ont la même disposition, mais sont quinconcées par rapport à celles de cette première face, de sorte que les centres des plaquettes en losange de la deuxième face correspondent aux trous 18 entourés de leur rondelle 19 de la première face. Ce perçage traversant des trous 6 et 9 apparaît également sur les figures 1 et 2.

Avantageusement comme montré fig 4, la série des thermocouples bouclera sur une plaquette soit de la face froide, soit de la face chaude. Cette plaquette de sortie 3s, sera reliée aux deux conducteurs électriques de sortie et son tracé sera pour cela légèrement modifié par rapport aux tracés montrés fig 3 pour éviter le court-circuit. Ainsi le liséré conducteur bordant chaque plaquette, situé entre la piste isolante 17 et le bord de ladite plaquette sera interrompu par exemple du côté opposé à celui de l'arrivée des conducteurs 15 et 16. Les deux circuits seront alors séparés sur la plaquette 3s, le conducteur 15 sera en contact avec une zone 14 (ou 13), tandis que le conducteur 16 sera en contact avec une zone 8 (ou 11).

Pour fabriquer un tel capteur, on peut réaliser des revêtements métalliques, par photogravure, soit en forme de plaquettes 3c, 3f, soit en forme d'éléments de surface 5 en 3 couches sur deux épaisseurs de substrat isolant.

Il convient de choisir les deux épaisseurs de substrat de telle sorte que le dépôt interne, par ex en constantan soit centré par rapport aux plaquettes 3c et 3f par ex en cuivre, afin d'obtenir un système symétrique.

Les deux épaisseurs revêtues sont ensuite pressées et collées en superposition pour obtenir la structure décrite et montrée sur les fig 1 et 2, puis des trous sont percés et métallisés par exemple en cuivre.

Selon la disponibilité des matériaux existant sur le marché, on peut simplifier la réalisation en utilisant un premier support verre époxy dont l'épaisseur est la moitié de l'épaisseur du substrat 1, revêtu de cuivre sur une face et en l'associant à un deuxième support de même épaisseur déjà revêtu de cuivre sur une face et de constantan sur l'autre face.

Grâce aux techniques de photogravure, on peut obtenir sans problème des densités de 200 jonctions froides et 200 jonctions chaudes par $dm^2$.

Du fait de la grande densité de jonctions possible, du fait de la plus grande facilité de dépôt d'un même métal dans tous les trous, du fait de la liberté de choisir un couple thermoélectrique performant, on obtient encore de meilleures performances qu'avec le capteur décrit dans EP-A1-0 003 271.

Ainsi un fluxmètre du nouveau type de 0,7 mm d'épaisseur est 1,35 fois plus sensible qu'un fluxmètre de l'ancien type (celui du brevet EP-A1-0 003 271) de 2,4 mm d'épaisseur avec la même densité de jonctions.

On utilisera des épaisseurs de revêtement sur la paroi des trous et en tant que plaquettes d'au moins 5 microns ($\mu$m) pour éviter la rupture et en général de l'ordre de 5 à 50 $\mu$m, et le substrat pourra avoir une épaisseur aussi faible que 0,1 mm et évidemment elle pourra être plus importante et atteindre plusieurs mm par ex 2, 3 ou même 10 mm.

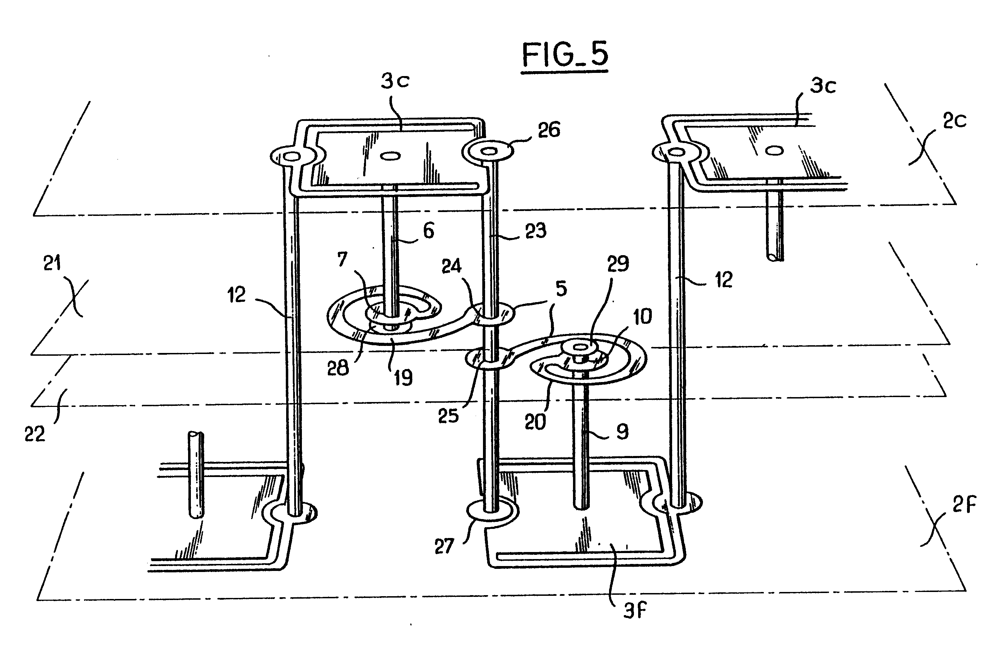

Pour encore améliorer la sensibilité, on pourra fabriquer les variantes de capteurs montrées sur les figures 5, 6 et 7.

Dans ces variantes, un élément de surface métallique 5 disposé dans l'épaisseur du substrat n'est plus en une seule pièce et n'appartient plus à un plan intermédiaire 4 unique, de préférence à mi-distance des faces 2c et 2f du substrat 1, mais est en plusieurs pièces appartenant à des plans intermédiaires différents situés dans l'épaisseur du substrat, ces différentes pièces d'un même élément de surface 5 étant toutefois reliées électriquement entre elles.

Dans les variantes illustrées, un élément de surface est formé de deux pièces 19 et 20, chaque

pièce par exemple 19 appartenant à un plan intermédiaire par exemple 21 situé dans l'épaisseur du substrat, distinct du plan intermédiaire 22 qui contient l'autre pièce par exemple 20. Ces pièces séparées 19, 20 situées dans deux plans 21 et 22 différents sont reliées électriquement par le revêtement métallique d'un trou 23 percé dans le substrat 1 et reliant deux de leurs points, 24 et 25, ou pour faciliter la réalisation, d'un trou 23 traversant l'ensemble du substrat 1 et croisant les deux pièces 19 et 20. Avantageusement, les sorties de ce trou 23 sur les faces 2c et 2f du substrat 1 sont entourées d'une rondelle métallique 26, 27 utile pour la fabrication. Dans la mesure où l'élément de surface 5 est en plus de deux pièces, plusieurs trous tels que 23 sont nécessaires.

Comme pour les réalisations précédemment décrites chaque élément de surface 5 est relié d'une part à une plaquette 3c de la face 2c par le revêtement métallique du trou 6, d'autre part à une plaquette 3f par le revêtement métallique du trou 9. Alors que dans les réalisations précédentes, le mode de fabrication amenait à percer des trous 6 et 9 traversant toute l'épaisseur du substrat 1, dans cette variante de réalisation, les trous 6 et 9 ne sont plus totalement traversants et, ils relient seulement les deux points ou zones 7 et 10 d'un élément métallique 5 respectivement à une plaquette 3c et 3f sans se prolonger au-delà dudit élément métallique 5. Avantageusement, les extrémités des trous 6 et 9 du côté des éléments de surface 5 sont bordés par des rondelles 28, 29.

Comme dans les réalisations précédentes, on cherchera à réduire la conduction thermique entre les points 7 et 10 d'un même élément de surface 5, même si cet élément de surface 5 est en plusieurs pièces. Comme précédemment on lui donnera des formes qui allongent la distance entre les deux points 7 et 10, par exemple une forme en S, chaque pièce constituant une portion de S, notamment un demi S dans le cas de deux pièces 19 et 20. Du fait de la possibilité d'employer plusieurs plans intermédiaires contenant des pièces d'éléments de surface 5, la liberté dans le choix de la forme et de la disposition desdites pièces est encore plus grande que précédemment.

Pour fabriquer cette variante de capteur, par exemple avec des éléments de surface 5 en deux pièces, on utilise deux épaisseurs identiques de substrat, métallisées identiquement sur leurs deux faces respectivement en chacun des deux métaux destinés à constituer les couples thermoélectriques, par exemple Cu et Ct. On perce les trous 6 et 9 au travers de chaque épaisseur, on dépose un premier revêtement métallique par exemple en cuivre dans les trous 6 et 9 et on forme les rondelles 28 et 29.

Par photogravure, sur la face revêtue par exemple de Ct, on fait apparaître le dessin des pièces appartenant aux éléments métalliques 5. On assemble les deux épaisseurs de substrat à l'aide d'un adhésif isolant électrique et thermique, en disposant en regard l'une de l'autre les deux faces revêtues de Ct ou du métal ou alliage jouant le même rôle si on a choisi un couple thermoélectrique autre que Cu/Ct. On effectue deux autres séries de perçages au travers des deux épaisseurs assemblées qui constituent le substrat 1, d'une part les trous 12 pour joindre les faces 2c et 2f, d'autre part les trous 23 traversant les deux pièces 19 et 20 d'un même élément 5. On métallise en Cu lorsqu'on a choisi le couple Cu/Ct, les trous nouvellement percés, ce qui ajoute en même temps une surépaisseur de Cu sur les faces 2c et 2f, et on grave lesdites faces pour y tracer des chemins en vue de faire apparaître les plaquettes 3c et 3f.

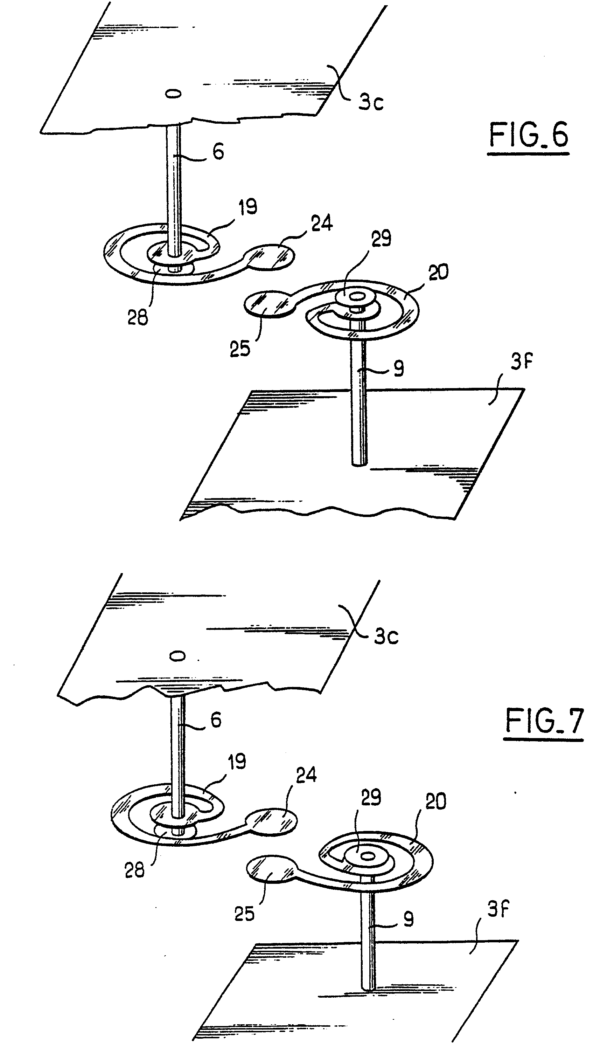

Les deux pièces formant les éléments métalliques 5 peuvent être symétriques et constituer après assemblage des S comme dans le cas des figures 5 et 6, chaque pièce étant un demi S, ou peuvent être exactement identiques pour constituer après assemblage des éléments métalliques 5 tels que ceux montrés figure 7, c'est-à-dire ayant en vue de dessus une forme de oméga (ω). Ce capteur incluant des éléments métalliques 5 en forme d'oméga, présente l'avantage d'être obtenu à partir de deux épaisseurs de substrat identiques, portant les mêmes revêtements, ayant les mêmes formes, ce qui simplifie la fabrication.

Dans cette variante, les dépôts assurant la conduction électrique et les dépôts assurant la conduction thermique sont réalisés au cours d'étapes distinctes, ce qui permet de disposer pour chaque fonction, conduction thermique ou conduction électrique, des épaisseurs de dépôts les mieux adaptées sans surépaisseur inutile favorisant les courts-circuits thermiques.

Les gammes d'épaisseur de revêtement et d'épaisseur de substrat sont du même ordre que celles prévues dans la première variante.

Les associations de capteurs se font également comme précédemment.

Ainsi qu'il est connu, on pourra également disposer, notamment dans le plan médian 4, ou les plans intermédiaires multiples, ou encore dans des plans supplémentaires, des sondes de température par ex, constituées par des dépôts supplémentaires de métaux ou alliages formant des couples.

De tels capteurs ou fluxmètres disposés perpendiculairement à un flux thermique délivrent une différence de potentiel qui est l'expression du flux thermique.

Juxtaposés sur une paroi, ou une tuyauterie et délivrant chacun une indication, de tels capteurs ou fluxmètres peuvent servir à mesurer les flux thermiques au travers de différentes zones de ladite paroi ou de ladite tuyauterie, en vue notamment de détecter et de localiser les éventuelles fuites thermiques.

De tels capteurs ou de tels fluxmètres peuvent également mesurer d'autres flux énergétiques, notamment un rayonnement visible ou infrarouge, à condition d'être associés à un transformateur de l'énergie rayonnée en chaleur, ladite chaleur ainsi produite étant alors ressentie et exploitée par les capteurs ou les fluxmètres comme indiqué précédemment.

Le transformateur d'énergie, dans le cas du rayonnement visible ou infrarouge, peut être seulement un revêtement d'une face du fluxmètre décrit précédemment, s'échauffant en absorbant ledit rayonnement. Ainsi un revêtement noir déposé sur une face, par exemple la face dite chaude, au moins sur les plaquettes 3c, engendre un échauffement desdites plaquettes qui entraîne la délivrance d'une différence de potentiel aux bornes du capteur ou du fluxmètre.

Avantageusement, l'autre face du capteur ou du fluxmètre, par exemple la face froide, est alors maintenue à température constante ; elle est notamment en contact avec un corps à température constante.

Compte tenu de la petite surface des rondelles 19 comparée à celle des plaquettes, l'ensemble de la surface d'une face pourra être revêtu, par exemple en revêtement noir métallique, notamment noir d'or ou simple peinture noire.

## Revendications

1. Capteur de flux énergétique formé d'un substrat (1) en un matériau isolant thermique et électrique, revêtu sur chacune de ses faces (2c, 2f) parallèles, perpendiculaires au flux, de plaquettes (3c, 3f) en un premier métal ou alliage, et traversé par des trous (12) reliant chacun une plaquette (3c, 3f) d'une face à une seule plaquette (3f, 3c) non encore reliée de l'autre face, trous dont la paroi est également revêtue du même premier métal, caractérisé en ce qu'il possède dans l'épaisseur dudit substrat, et parallèlement à ses faces (2c, 2f) des éléments de surface (5) séparés en un second métal ou alliage à propriétés thermoélectriques par rapport au premier, deux points (7, 10) de chacun de ces éléments de surface (5) constituant les jonctions chaudes et froides d'un thermocouple, étant reliés électriquement à une plaquette métallique respective (3c, 3f) de chaque face (2c, 2f) du substrat (1) par un revêtement du premier métal ou alliage sur la paroi de trous (6, 9) joignant chacun desdits deux points (7, 10) aux plaquettes (3c, 3f), lesdites deux plaquettes (3c, 3f) ainsi reliées par l'intermédiaire des éléments de surface (5) étant préalablement encore séparées.

2. Capteur selon la revendication 1, caractérisé en ce que les plaquettes (3c, 3f) sur chaque face du substrat sont disposées à l'aplomb des jonctions (7, 10) respectivement chaudes et froides auxquelles elles sont reliées.

3. Capteur selon la revendication 2, caractérisé en ce que les trous (12) reliant directement deux plaquettes (3c, 3f) opposées sont perpendiculaires aux faces (2c, 2f) du substrat (1).

4. Capteur selon l'une des revendications 1 à 3, caractérisé en ce que sur chaque plaquette (3c, 3f) le trajet entre l'arrivée du trou (14, 13) la joignant à une plaquette (3c, 3f) de l'autre face et l'arrivée du trou (8, 11) la joignant à une jonction chaude (7) ou une jonction froide (10), est allongé par des pistes isolantes tracées dans la plaquette (3c, 3f) et formant des chicanes.

5. Capteur selon la revendication 4, caractérisé en ce que les pistes isolantes sur les plaquettes (3c, 3f) ont la forme montrée fig 2.

6. Capteur selon l'une des revendications 1 à 5, caractérisé en ce que les plaquettes (3c, 3f) sur chaque face (2c, 2f) sont quinconcées par rapport aux plaquettes (3f, 3c) de la face opposée (2f, 2c).

7. Capteur selon l'une des revendications 1 à 6, caractérisé en ce que les plaquettes (3c, 3f) sont disposées côte-à-côte sur chaque face, occupant ainsi la totalité de la surface.

8. Capteur selon la revendication 7, caractérisé en ce que les plaquettes (3c, 3f) ont la forme de losanges et en ce que les pistes isolantes qu'elles contiennent forment une enclave autour de l'arrivée du trou (13, 14) les reliant à la plaquette (3f, 3c) de la face opposée, ladite enclave étant située dans un angle du losange.

9. Capteur selon l'une des revendications 1 à 8, caractérisé en ce que les arrivées de trous (8, 11) provenant d'une jonction chaude (7) ou d'une jonction froide (10) sont centrées sur les plaquettes (3c, 3f).

10. Capteur selon l'une des revendications 1 à 9, caractérisé en ce que le couple choisi est Cuivre-Constantan, le constantan formant les éléments de surface (5) séparés, le cuivre étant déposé partout ailleurs.

11. Capteur selon l'une des revendications 1 à 10, caractérisé en ce que les éléments de surface (5) contenant les jonctions chaudes (7) et les jonctions froides (10) des thermocouples sont découpées pour que la longueur du trajet métallisé entre jonction chaude (7) et jonction froide (10) soit augmentée.

12. Capteur selon la revendication 11, caractérisé en ce que l'élément de surface (5) métallisé contenant une jonction chaude (7) et une jonction froide (10) est en forme de S, la jonction chaude (7) et la jonction froide (10) étant aux deux extrémités du S.

13. Capteur selon l'une des revendications précédentes caractérisé en ce que les éléments de surface (5) appartiennent à un plan (4) unique.

14. Capteur selon la revendication 13, caractérisé en ce que ce plan (4) unique qui contient les éléments de surface (5) est situé à mi-distance entre les deux faces (2c, 2f) du substrat 1.

15. Capteur selon l'une des revendications 13 ou 14, caractérisé en ce que les trous (6, 9) joignant une jonction chaude (7) ou une jonction froide (10) à une plaquette (3c, 3f) traversent la totalité du substrat (1) et en ce que leur arrivée sur l'autre face est entourée par une rondelle métallisée de surface très petite comparée à celle des plaquettes (3c, 3f).

16. Capteur selon l'une des revendications 1 à 11, caractérisé en ce que des éléments de surface (5) sont en plusieurs pièces qui appartiennent à plusieurs plans intermédiaires disposés dans l'épaisseur du substrat (1) ces différentes pièces d'un même élément de surface (5) étant reliées électriquement.

17. Capteur selon la revendication 16, caractérisé en ce que des éléments de surface (5) sont en deux pièces (19, 20) qui appartiennent à deux plans intermédiaires (21, 22) disposés dans l'épaisseur du substrat (1).

18. Capteur selon la revendication 17, caractérisé en ce que les deux plans intermédiaires (21, 22) sont disposés symétriquement par rapport au plan situé à mi-distance entre les deux faces (2c, 2f).

19. Capteur selon l'une des revendications 17 à 18, caractérisé en ce que la liaison électrique entre les deux pièces (19, 20) d'un même élément de surface (5) est obtenue par le revêtement métallique d'un trou (23) percé dans le substrat (1) et traversant les pièces (19, 20) à relier.

20. Capteur selon l'une des revendications 17 à 19, caractérisé en ce que chaque pièce (19, 20) de l'élément de surface (5) est un demi S, les deux pièces (19, 20) assemblées formant un S ou un oméga.

21. Capteur selon l'une des revendications 1 à 20, caractérisé en ce que les dépôts métalliques ont de 5 à 50 µm d'épaisseur.

22. Capteur selon l'une des revendications 1 à 21, caractérisé en ce que le substrat (1) a au moins 0,1 mm d'épaisseur.

23. Fluxmètre caractérisé en ce qu'il comporte plusieurs capteurs, selon les revendications 1 à 22, associés en série, les extrémités de la série étant reliées à des conducteurs aux bornes desquelles une différence de potentiel est prélevée.

24. Fluxmètre selon la revendication 23, caractérisé en ce que les deux conducteurs de sortie d'une série aboutissent à une même plaquette, le trajet conducteur sur chaque plaquette, issu d'un conducteur et aboutissant à un trou métallisé étant séparé du trajet conducteur issu de l'autre conducteur et aboutissant à un autre trou métallisé de la même plaquette par une coupure sur le métal de la plaquette entre les deux trajets conducteurs.

25. Application d'un capteur ou d'un fluxmètre associant en série plusieurs capteurs unitaires selon les revendications précédentes, à la mesure d'un flux thermique, ledit capteur ou lesdits capteurs associés en série étant placés perpendiculairement au flux thermique à mesurer.

26. Application d'un capteur ou d'un fluxmètre associant en série plusieurs capteurs selon les revendications précédentes à la mesure d'un rayonnement visible ou infrarouge, caractérisé en ce qu'il reçoit un revêtement transformant le rayonnement en chaleur, au moins sur les plaquettes d'une face, et en ce que l'autre face est maintenue à température constante.

27. Application d'un capteur ou d'un fluxmètre selon l'une des revendications 1 à 24 précédentes, à la détection de fuites thermiques à travers des parois, caractérisé en ce que des capteurs ou fluxmètres sont juxtaposés en recouvrement desdites parois et en ce qu'on recueille la mesure de chaque capteur ou fluxmètre rendant compte du flux thermique au travers de la zone de paroi couverte par ledit capteur ou fluxmètre, la comparaison avec les mesures sur les autres zones permettant de mettre en évidence d'éventuelles fuites.

## Claims

1. Energy flux pick-up comprising a support (1) consisting of a thermally and electrically insulating material coated on each of its parallel sides (2c, 2f) which are perpendicular to the flux, with small plates (3c, 3f) of a first metal or alloy and traversed by holes (12) each of which connects a small plate (3c, 3f) on one side with a single small plate (3f, 3c) on the other side and as yet not connected, the said holes having walls likewise coated with the same first metal, characterised in that it comprises in the thickness of the said support and parallel with its faces (2c, 2f) separate surface elements (5) consisting of a second metal or alloy having thermoelectrical properties in relation to the first, two points (7, 10) on each of these surface elements (5) constituting hot and cold junctions of a thermocouple, being electrically connected to a respective metal plate (3c, 3f) on each side (2c, 2f) of the support (1) by a coating of the first metal or alloy on the wall of holes (6, 9) connecting each of the said two points (7, 10) to the plates (3c, 3f), the said two plates (3c, 3f) thus connected by the surface elements (5) being previously still separated.

2. Pick-up according to Claim 1, characterised in that the plates (3c, 3f) on each face of the support are disposed flush with the respectively hot and cold junctions (7, 10) to which they are connected.

3. Pick-up according to Claim 1, characterised in that the holes (12) directly connecting two opposite plates (3c, 3f) are perpendicular to the faces (2c, 2f) of the support (1).

4. Pick-up according to one of Claims 1 to 3, characterised in that on each plate (3c, 3f) the path between the entrance to the hole (14, 13) connecting it to a plate (3c, 3f) on the other face and the inlet to the hole (8, 11) connecting it to a hot junction (7) or a cold junction (10) is extended by insulating tracks traced in the plates (3c, 3f) and forming chicanes.

5. Pick-up according to Claim 4, characterised in that the insulating tracks on the plates (3c, 3f) take the form shown in Fig. 2.

6. Pick-up according to one of Claims 1 to 5, characterised in that the plates (3c, 3f) on each face (2c, 2f) are staggered in relation to the places (3c, 3f) on the opposite face (2f, 2c).

7. Pick-up according to one of Claims 1 to 6, characterised in that the plates (3c, 3f) are disposed side by side on each face, thus occupying the entire surface area.

8. Pick-up according to Claim 7, characterised in that the plates (3c, 3f) are lozenge-shaped and in that the insulating tracks which they carry form an enclave around the entrance to the hole (13, 14) connecting them to the plate (3f, 3c) on the opposite face, the said enclave being situated in one corner of the lozenge.

9. Pick-up according to one of Claims 1 to 8, characterised in that the inlets to the holes (8, 11) emanating from a hot junction (7) or a cold junction (10) are centered on the plates (3c, 3f).

10. Pick-up according to one of Claims 1 to 9, characterised in that the couple selected is copper-constantan, the constantan forming the separate surface elements (5), the copper being deposited everywhere else.

11. Pick-up according to one of Claims 1 to 10, characterised in that the surface elements (5) containing the hot junctions (7) and the cold junctions (10) of the thermocouples are cut out so that the length of the metallised path between hot junction (7) and cold junction (10) is increased.

12. Pick-up according to Claim 11, characterised in that the metallised surface element (5) containing a hot junction (7) and a cold junction (10) is S-shaped, the hot junction (7) and the cold junction (10) being at the two ends of the S.

13. Pick-up according to one of the preceding Claims, characterised in that the surface elements (5) are in one single plane (4).

14. Pick-up according to Claim 13, characterised in that the said single plane (4) which contains the surface elements (5) is situated halfway between the two faces (2c, 2f) of the support (1).

15. Pick-up according to one of Claims 13 or 14, characterised in that the holes (6, 9) connecting a hot junction (7) or a cold junction (10) to a plate (3c, 3f) traverse the whole of the support (1) and in that their inlet on the other face is encircled by a metallised washer of very small surface area compared with that of the plates (3c, 3f).

16. Pick-up according to one of Claims 1 to 11, characterised in that the surface elements (5) are in a plurality of parts which belong to a plurality of intermediate planes disposed in the thickness of the support (1), these various parts of one and the same surface element (5) being electrically connected.

17. Pick-up according to Claim 16, characterised in that the surface elements (5) are in two parts (19, 20) which are in two intermediate planes (21, 22) disposed in the thickness of the support (1).

18. Pick-up according to Claim 17, characterised in that the two intermediate planes (21, 22) are disposed symmetrically in relation to the plane situated midway between the two faces (2c, 2f).

19. Pick-up according to one of Claims 17 to 18, characterised in that the electrical connection between the two parts (19, 20) of one and the same surface element (5) is achieved by the metallic coating of a hole (23) made in the support (1) and traversing the parts (19, 20) which are to be connected.

20. Pick-up according to one of Claims 17 to 19, characterised in that each part (19, 20) of the surface element (5) is shaped like half an S, the two assembled parts (19, 20) forming an S or an omega.

21. Pick-up according to one of Claims 1 to 20, characterised in that the metallic deposits are 5 to 50 μm thick.

22. Pick-up according to one of Claims 1 to 21, characterised in that the support (1) is at least 0.1 mm thick.

23. Flux meter characterised in that it comprises a plurality of pick-ups according to Claims 1 to 22, associated or in series, the ends of the series being connected to conductors, from the terminals of which a potential difference is drawn.

24. Flux meter according to Claim 23, characterised in that the two output conductors of a series terminate at one and the same plate, the conductive path on each plate, emanating from one conductor and terminating at a metallised hole, being separated from the conductive path emanating from the other conductor and terminating at another metallised hole in the same plate by a cut made on the metal of the plate, between the two conductive paths.

25. Application of a pick-up or of a flux meter associating a plurality of unitary pick-ups according to the preceding Claims in series, to the measurement of a thermal flux, the said pick-up or pick-ups associated in series being disposed perpendicularly to the thermal flux which is to be measured.

26. Application of a pick-up or of a flux meter associating a plurality of pick-ups according to the preceding Claims in series to the measurement of visible or infra-red rays, characterised in that it is given a coating which converts the rays to heat, at least on the plates of one side, and in that the other side is maintained at a constant temperature.

27. Application of a pick-up or of a flux meter according to one of the preceding Claims 1 to 24 to the detection of lekages of heat through walls, characterised in that pick-ups or flux meters are juxtaposed, covering the said walls, and in that the measurement recorded by each pick-up or flux meter is gathered, taking into account the flow of heat through the zone of the wall which is covered by the said pick-up or flux meter, comparison with measurements over other zones making it possible to reveal possible leakages.


**Patentansprüche**

1. Energiestrom-Meßzelle gebildet aus einem Substrat (1) aus einem wärmedämmenden und elektrisch isolierenden Material, welche auf jeder ihrer parallelen Seiten (2c, 2f), welche senkrecht zum Durchfluß angeordnet sind, mit Plättchen (3c, 3f) aus einem ersten Metall oder einer ersten Legierung überzogen ist, und von öffnungen (12) durchsetzt ist, wobei jede ein Plättchen (3c, 3f) einer Seite mit einem einzelnen Plättchen (3f, 3c) verbindet, das noch nicht mit der anderen Seite verbunden ist, wobei die Seitenwand der öffnungen ebenfalls mit dem selben ersten Metall überzogen ist, dadurch gekennzeichnet, daß sie in der Dicke des Substrats und parallel zu ihren Seiten (2c, 2f) von den ersten getrennte Flächenelemente

(5) aus einem zweiten Metall oder einer zweiten Legierung mit thermoelektrischen Eigenschaften aufweist, wobei zwei Stellen (7, 10) eines jeden der Flächenelemente (5) die warmen und kalten Verbindungsstellen eines Thermoelements bilden, die elektrisch mit einem entsprechenden Metallplättchen (3c, 3f) einer jeden Seite (2c, 2f) des Substrats (1) durch einen Überzug des ersten Metalls oder der ersten Legierung auf der Seitenwand von Öffnungen (6, 9) verbunden sind, welche eine jede der Stellen (7, 10) mit den Plättchen (3c, 3f) verbinden, wobei die zwei Plättchen (3c, 3f) sodann mittels der Flächenelemente (5), die vorher noch getrennt sind, miteinander verbunden sind.

2. Meßzelle nach Anspruch 1, dadurch gekennzeichnet, daß die Plättchen (3c, 3f) an jeder Seite des Substrats senkrecht zu den warmen oder kalten Verbindungsstellen (7, 10) entsprechend angeordnet sind, mit denen sie verbunden sind.

3. Meßzelle nach Anspruch 2, dadurch gekennzeichnet, daß die Öffnungen (12), welche direkt zwei gegenüberliegende Plättchen (3c, 3f) miteinander verbinden, senkrecht zu den Seiten (2c, 2f) des Substrats (1) angeordnet sind.

4. Meßzelle nach einem der Ansprüche 1 bis 3, dadurch gekennzeichnet, daß auf jedem Plättchen (3c, 3f) der Weg zwischen dem Einlaß der Öffnung (14, 13), welche sie mit einem Plättchen (3c, 3f) der anderen Seite verbindet und dem Einlaß einer Öffnung (8, 11), die sie mit einer warmen Verbindungsstelle (7) oder einer kalten Verbindungsstelle (10) verbindet, durch Dämmbahnen verlängert wird, die in das Plättchen (3c, 3f) eingekerbt sind und Schikanen bilden.

5. Meßzelle nach Anspruch 4, dadurch gekennzeichnet, daß die Dämmbahnen auf den Plättchen (3c, 3f) eine wie in Figur 2 gezeigte Form aufweisen.

6. Meßzelle nach einem der Ansprüche 1 bis 5, dadurch gekennzeichnet, daß die Plättchen (3c, 3f) auf jeder Seite (2c, 2f) gegenüber den Plättchen (3f, 3c) einer gegenüberliegenden Seite (2f, 2c) versetzt angeordnet sind.

7. Meßzelle nach einem der Ansprüche 1 bis 6, dadurch gekennzeichnet, daß die Plättchen (3c, 3f) Seite an Seite an jeder Seite angeordnet sind, wobei sie somit die Gesamtheit der Oberfläche abdecken.

8. Meßzelle nach Anspruch 7, dadurch gekennzeichnet, daß die Plättchen (3c, 3f) die Form einer Raute aufweisen, und daß die Dämmbahnen, die sie enthalten einen Einschluß (Enclave) um einen Einlaß der Öffnung (13, 14) bilden, sie mit den Plättchen (3f, 3c) der gegenüberliegenden Seiten verbinden, wobei der Einschluß in einer Rautenecke angeordnet ist.

9. Meßzelle nach einem der Ansprüche 1 bis 8, dadurch gekennzeichnet, daß die Ausgänge der Öffnungen (8, 11), welche von einer warmen Verbindungsstelle (7) oder einer kalten Verbindungsstelle (10) kommen auf den Plättchen (3c, 3f) mittig angeordnet sind.

10. Meßzelle nach einem der Ansprüche 1 bis 9, dadurch gekennzeichnet, daß das gewählte Thermoelement aus Kupfer-Konstantan gebildet ist, wobei das Konstantan die voneinander getrennten Flächenelemente (5) bildet, und das Kupfer überall sonst angeordnet ist.

11. Meßzelle nach einem der Ansprüche 1 bis 10, dadurch gekennzeichnet, daß die Flächenelemente (5), die die kalten Verbindungsstellen (7) und die warmen Verbindungsstellen (10) der Thermoelemente enthalten, getrennt sind, damit die Länge des metallisierten Weges zwischen der warmen Verbindungsstelle (7) und der kalten Verbindungsstelle (10) erhöht ist.

12. Meßzelle nach Anspruch 11, dadurch gekennzeichnet, daß das metallisierte Flächenelement (5), das eine warme Verbindungsstelle (7) und eine kalte Verbindungsstelle (10) aufweist, eine « S »-Form aufweist, wobei die warme Verbindungsstelle (7) und die kalte Verbindungsstelle (10) sich in den beiden Endbereichen des « S » befinden.

13. Meßzelle nach einem der vorhergehenden Ansprüche, dadurch gekennzeichnet, daß die Flächenelemente (5) zu einer einzigen Ebene (4) gehören.

14. Meßzelle nach Anspruch 13, dadurch gekennzeichnet, daß die einzige Ebene (4), welche die Flächenelemente (5) aufweist, auf halber Höhe zwischen den beiden Seiten (2c, 2f) des Substrats (1) angeordnet ist.

15. Meßzelle nach einem der Ansprüche 13 oder 14, dadurch gekennzeichnet, daß die Öffnungen (6, 9) welche eine warme Verbindungsstelle (7) oder eine kalte Verbindungsstelle (10) mit einem Plättchen (3c, 3f) verbinden, die gesamte Dicke des Substrats (1) durchqueren, und daß ihr Ausgang an der anderen Seite von einem Metallring von sehr kleiner Fläche umgeben ist, verglichen mit der der Plättchen (3c, 3f).

16. Meßzelle nach einem der Ansprüche 1 bis 11, dadurch gekennzeichnet, daß die Flächenelemente (5) aus mehreren Teilen bestehen, die auf mehreren Zwischenebenen in der Dicke des Substrats (1) angeordnet sind, wobei die einzelnen Teile des gleichen Flächenelements (5) elektrisch miteinander verbunden sind.

17. Meßzelle nach Anspruch 16, dadurch gekennzeichnet, daß die Flächenelemente (5) aus zwei Teilen (19, 20) gebildet sind, die auf zwei Zwischenebenen (21, 22) angeordnet sind, die in der Dicke des Substrats (1) angeordnet sind.

18. Meßzelle nach Anspruch 17, dadurch gekennzeichnet, daß die beiden Zwischenebenen (21, 22) bezüglich der Mittenebene zwischen den beiden Seiten (2c, 2f) symmetrisch angeordnet sind.

19. Meßzelle nach einem der Ansprüche 17 oder 18, dadurch gekennzeichnet, daß die elektrische Verbindung zwischen den beiden Teilen (19, 20) des selben Flächenelements (5) durch den metallischen Überzug einer Öffnung (23) erreicht wird, die in das Substrat (1) eingebracht ist und die zu verbindenden Teile (19, 20) miteinander verbindet.

20. Meßzelle nach einem der Ansprüche 17 bis 19, dadurch gekennzeichnet, daß jedes Element (19, 20) des Flächenelements (5) ein halbes « S » ist, wobei die beiden zusammengefügten Teile (19, 20) ein goßes « S » oder ein Omega bilden.

21. Meßzelle nach einem der Ansprüch 1 bis 20, dadurch gekennzeichnet, daß die matallischen Aufträge eine Dicke von 5 bis 50 μm aufweisen.

22. Meßzelle nach einem der Ansprüche 1 bis 21, dadurch gekennzeichnet, daß das Substrat (1) wenigstens eine Dicke von 0,1 mm aufweist.

23. Flußmesser, dadurch gekennzeichnet, daß er mehrere Meßzellen nach einem der Ansprüche 1 bis 22 aufweist, welche in Reihe miteinander verbunden sind, wobei die Enden der Reihe mit Leitern verbunden sind, an deren Enden eine Potentialdifferenz abgegriffen wird.

24. Flußmesser nach Anspruch 23, dadurch gekennzeichnet, daß die beiden Leiter der Ausgangs einer Reihe zu dem selben Plättchen führen, der Leiterbahn ausgehend von einem Leiter zu jedem Plättchen führt, und eine metallisierte Öffnung erreichend, die von der Leiterbahn getrennt ist, von dem anderen Leiter ausgeht und in eine andere metallisierte Öffnung des gleichen Plättchens durch einen Schnitt in dem Metall des Plättchens zwischen den beiden leitenden Bahnen mündet.

25. Verwendung einer Meßzelle oder eines Flußmessers, welcher in Verbindung steht mit mehreren einzelnen Meßzellen, nach einem der vorhergehenden Ansprüche bei der Messung eines Wärmestroms, wobei die Meßzelle oder die in Reihe verbundenen Meßzellen senkrecht zu dem zu messenden Wärmestrom angeordnet sind.

26. Verwendung einer Meßzelle oder eines Flußmessers, nach einem der vorhergehenden Ansprüche, der mehrere Meßzellen in Reihe verbindet, bei der Messung einer sichtbaren Strahlung oder einer Infrotstrahlung, dadurch gekennzeichnet, daß sie oder er einen überzug wenigstens an den Plättchen einer Seite erhält, die die Strahlung in Wärme umwandelt, und daß die andere Seite auf einer konstanten Temperatur gehalten wird.

27. Verwendung einer Meßzelle oder eines Flußmessers nach einem der vorhergehenden Ansprüche 1 bis 24, bei der Erfassung von Wärmeverlusten durch Wände hindurch, dadurch gekennzeichnet, daß Meßzellen oder Flußmesser aneinander angeordnet sind, wobei sie die Wände überdecken, und daß die Messung eines jeden Flußmessers oder einer jeden Meßzelle erfaßt wird, welche den Wärmestrom über die Wandzone ermitteln, die durch die Meßzelle oder den Flußmesser bedeckt ist, wobei der Vergleich mit den Messungen in den anderen Bereichen ermöglicht, eventuelle Wärmeverluste aufzuzeigen.

FIG_1

FIG_2

## FIG. 3

FIG_4

FIG_5

FIG. 6

FIG. 7